# EUROPÄISCHE PATENTANMELDUNG

(11) **EP 2 930 488 A1**
(43) Veröffentlichungstag der Anmeldung: **14.10.2015**
(21) Anmeldenummer: 14305533.3
(22) Anmeldetag: 10.04.2014
(51) Int. Cl.: G01L 21/00

(54) **Vorrichtung zur Bestimmung des Drucks in einer Vakuumkammer**

(71) Anmelder: Nexans, 75008 Paris (FR)
(72) Erfinder: Soika, Rainer, 30559 Hannover (DE); West, Beate, 30169 Hannover (DE); Frohne, Christian, 30657 Hannover (DE); Charrier, Dimitri, 69130 Ecully (FR); Charmetant, Adrien, 69003 Lyon (FR)
(74) Vertreter: Feray, Valérie

(57) **Zusammenfassung**

Es wird eine Vorrichtung zur Bestimmung des Drucks in einer Vakuumkammer angegeben, welche einen innerhalb der Vakuumkammer angeordneten Vakuumsensor umfaßt. Innerhalb der Vakuumkammer ist ein mit dem Vakuumsensor verbundener Wiedergabesender und außerhalb der Vakuumkammer ist ein mit dem Wiedergabesender drahtlos verbundener Empfänger angeordnet. Der Empfänger ist mit einer außerhalb der Vakuumkammer angeordneten Anzeigeeinheit verbunden. Der Wiedergabesender und der Empfänger sind zu beiden Seiten einer Wand der Vakuumkammer angeordnet, sodaß von dem Vakuumsensor erfaßte Meßwerte von dem Wiedergabesender drahtlos zu dem Empfänger übertragbar und von der Anzeigeeinheit anzeigbar sind.

## Beschreibung

Die Erfindung bezieht sich auf eine Vorrichtung zur Bestimmung des Drucks in einer Vakuumkammer, welche einen innerhalb der Vakuumkammer angeordneten Vakuumsensor umfaßt.

Eine Vakuumkammer, d.h. ein hermetisch abgedichteter, evakuierter Raum, kann beispielsweise die thermische Isolierung eines vakuumisolierten Flüssiggastanks oder die thermische Isolierung einer vakuumisolierten Rohrleitung zur Führung eines gekühlten Mediums, beispielsweise Flüssigerdgas, Helium oder Stickstoff, oder die Vakuumisolierung einer kryogenen Ummantelung eines supraleitenden Kabels sein. Vakuumkammern sind weiterhin als Prozeßkammern, beispielsweise für die Fertigung von integrierten Schaltkreisen auf Silikonwafern, in der Halbleiterindustrie oder für die Plasmabeschichtung bekannt. Die folgenden Ausführungen beziehen sich auf eine Vakuumisolierung für eine Rohrleitung stellvertretend für alle anderen möglichen Vakuumkammern.

Vakuumisolierungen sind Beispiele für permanentevakuierte Vakuumanlagen, bei denen der Vakuumraum nach dem Ende des Evakuierungsprozesses dauerhaft versiegelt wird. Vakuummeter zur Überwachung des Vakuums dürfen keine durch Signal- und Energiekabeldurchführungen verursachten potentiellen Undichtigkeiten in solche permanentevakuierten Vakuumanlagen einbringen.

Das bekannte Gasreibungsvakuummeßgerät erfüllt diese Bedingung. Dieses auch als Kugelreibungsvakuummeter bekannte Gerät eignet sich besonders für die Bestimmung des Gasdrucks im Hochvakuumbereich und erlaubt die Messung des Drucks bis ca. 10⁻⁷ mbar. In einem räumlich mit der Vakuumkammer verbundenen Metallrohr wird eine Kugel als Gasreibungssensor durch eine Magnet- und Spulenanordnung berührungslos gelagert und in Rotation versetzt. Nach dem Abschalten des Spulenantriebs nimmt die Drehfrequenz der Kugel durch die Gasreibung ab, womit sich der Druck des vorhandenen Gases berechnen und anzeigen läßt. Um Ungenauigkeiten bei der Messung des Vakuums zu vermeiden, muß das Metallrohr allerdings exakt horizontal ausgerichtet sein.

Um eine Messung des Vakuums zu ermöglichen, verfügen vakuumisolierte Leitungen für flüssige Gase oder vakuumisolierte Ummantelungen für supraleitende Kabel an deren Ende bzw. an jeweils zwei Vakuumräume trennenden Zwischenstücken über angeschweißte, nach außen abstehende Meßstutzen, welche das Metallrohr mit dem Gasreibungssensor enthalten. Die Meßstutzen müssen horizontal ausgerichtet sein. Die Korrektur der Ausrichtung ist nach der Installation bzw. nach dem Einziehen der vakuumisolierten Leitungen nicht immer möglich. Des weiteren kann der Meßstutzen während des Einziehens der Leitungen stören und beschädigt werden oder das Einziehen sogar ganz unmöglich machen.

Vakuumisolierte Ummantelungen von supraleitenden Kabeln und sowie vakuumisolierte Flüssiggasleitungen können über mehrere einzelne, über die Länge der Leitung verteilte Vakuumkammern verfügen. Das Vakuum in diesen einzelnen Vakuumkammern muß deshalb individuell überwacht werden. Bei solchen verteilten Vakuumkammern sind einzelne, nach außen abstehende Meßstutzen besonders nachteilhaft. Weiterhin ist eine Messung bzw. Überprüfung des Vakuums in den verteilten Vakuumkammern undurchführbar, wenn die Leitung bereits in ein Rohr oder einen Kanal eingezogen worden ist.

Der Erfindung liegt die Aufgabe zugrunde, eine Vorrichtung zur Messung des Drucks in einer Vakuumkammer bereitzustellen, mittels welcher keine potentiellen Undichtigkeiten in die Vakuumkammer eingebracht und die weiteren oben genannten Probleme gelöst werden.

Diese Aufgabe wird gemäß der Erfindung dadurch gelöst,
- daß innerhalb der Vakuumkammer ein mit dem Vakuumsensor verbundener Wiedergabesender und außerhalb der Vakuumkammer ein mit dem Wiedergabesender drahtlos verbundener Empfänger angeordnet sind und
- daß der Empfänger mit einer außerhalb der Vakuumkammer angeordneten Anzeigeeinheit verbunden ist,
wobei der Wiedergabesender und der Empfänger zu beiden Seiten einer Wand der Vakuumkammer angeordnet sind, sodaß von dem Vakuumsensor erfaßte Meßwerte von dem Wiedergabesender drahtlos zu dem Empfänger übertragbar und von der Anzeigeeinheit anzeigbar sind.

Die erfindungsgemäße Vorrichtung erlaubt mit Vorteil die Überwachung bzw. Überprüfung des Vakuums in unzugänglichen, dauerhaften Vakuumkammern, beispielsweise in einer Vielzahl von verteilten Vakuumkammern entlang eines supraleitenden Kabels oder einer Flüssiggasleitung. Die Druckmeßwerte werden von den jeweils in einer Vakuumkammer angeordneten Vakuumsensoren über die Wiedergabesender-Empfängeranordnung drahtlos nach außen übertragen und von einer Anzeigeeinheit angezeigt. Der außen an der Vakuumkammer angebrachte Empfänger ist kompakt und stellt beispielsweise beim Einziehen einer vakuumisolierten Leitung kein Hindernis dar und wird nicht beschädigt. Auch kann der Empfänger mit besonderem Vorteil gegebenenfalls erst nach der Installation außen auf die vakuumisolierte Leitung oder in deren Umgebung angebracht werden, sodaß in diesem Fall die Gefahr der Beschädigung des Empfängers während der Installation der Vakuumkammer vermieden wird. Durch die drahtlose Meßwertübertragung werden außerdem keine potentiellen Undichtigkeiten durch Kabeldurchgänge in die Vakuumkammer eingebracht.

Mit Vorteil werden als Vakuumsensoren MEMS (Abkürzung für *microelectromechanical systems*)-Vakuumsensoren verwendet. Diese zeichnen sich durch ihre kompakte Größe und ihren sehr geringen Stromverbrauch aus. Beispielsweise betragen die Abmessungen eines kommerziell erhältlichen MEMS-Wärmeleitungsvakuummeters (auch MEMS-Pirani-Vakuummeter genannt) nur wenige mm². Deshalb lassen sich derartige Detektoren einfach in verschiedenste Vakuumkammern integrieren. MEMS-Vakuumsensoren sind auch besonders im Rahmen einer drahtlosen Signal- und Energieübertragung geeignet.

Von besonderem Vorteil ist weiterhin, daß sich die erfindungsgemäße Vorrichtung mit allen möglichen Vakuumkammern zur Anwendung bringen läßt. Insbesondere ist sie für die Messung des Vakuums im passiven Vakuum (wie die eingangs genannten thermischen Isolierungen, kryogenen Ummantelungen eines supraleitenden Kabels, usw.) als auch im aktiven Vakuum (wie die eingangs genannten Prozeßkammern in der Halbleiterindustrie) geeignet.

Ausführungsbeispiele des Erfindungsgegenstandes sind in den Zeichnungen dargestellt. Es zeigen:
Fig. 1 schematisch einen Querschnitt eines Abschnitts einer vakuumisolierten Leitung mit einer erfindungsgemäßen Vorrichtung und
Fig. 2 schematisch einen Querschnitt eines Abschnitts einer vakuumisolierten Leitung mit zwei Vakuumkammern, die jeweils mit der erfindungsgemäßen Vorrichtung ausgerüstet sind.

Die Erfindung wird im Folgenden am Beispiel einer Rohrleitung erläutert. Die Vakuumisolierung der Rohrleitung wird stellvertretend für alle anderen möglichen Vakuumkammern, von denen einige eingangs genannt wurden, als Beispiel herangezogen.

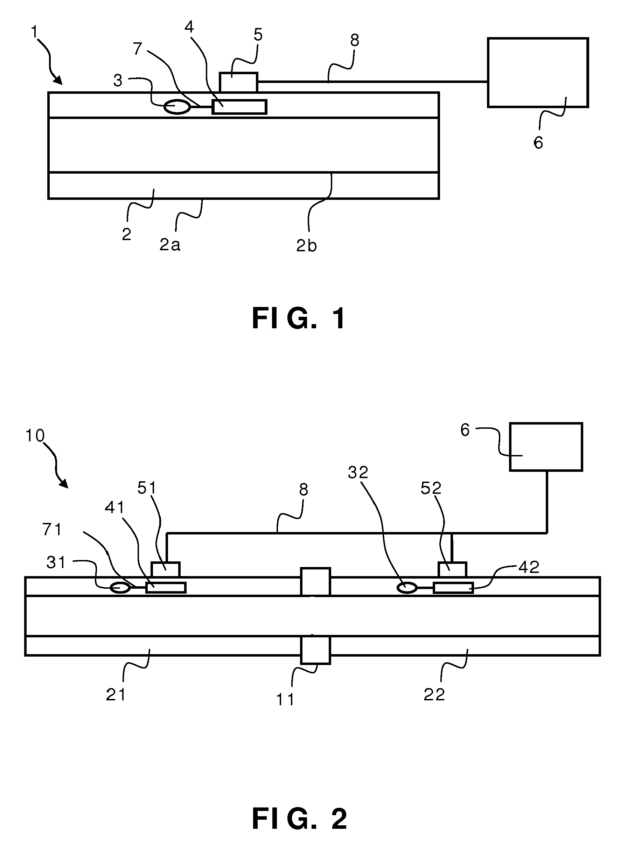

In Fig. 1 ist teilweise und schematisch im Querschnitt eine Vakuumkammer 2 einer Leitung 1 gezeigt, die mit der erfindungsgemäßen Vorrichtung ausgerüstet ist. Die Leitung 1 kann beispielsweise eine Flüssiggasleitung oder eine kryogene Ummantelung eines supraleitenden Kabels sein. Die Vakuumkammer 2 ist aus dem hermetisch abgedichteten und evakuierten Raum zwischen zwei konzentrisch angeordneten Metallrohren 2a, 2b gebildet. Die beiden Metallrohre 2a, 2b können beispielsweise aus Edelstahl bestehen. Sie werden vorzugsweise durch Abstandhalter (nicht dargestellt) aus Kunststoff in ihrer gegenseitigen Stellung gehalten.

Die erfindungsgemäße Vorrichtung zur Bestimmung des Drucks in der Vakuumkammer 2 umfaßt einen Vakuumsensor 3, einen Wiedergabesender 4, einen Empfänger 5 und eine Anzeigeeinheit 6. Der Vakuumsensor 3 und der Wiedergabesender 4 sind innerhalb der Vakuumkammer 2 angeordnet und elektrisch und kommunikativ miteinander verbunden, beispielsweise über ein Kabel 7. Der Empfänger 5 ist außerhalb der Vakuumkammer 2 angebracht und mit diesem drahtlos verbunden. In der Ausführungsform nach Fig. 1 sind der Wiedergabesender 4 und der Empfänger 5 in unmittelbarer Nähe zueinander zu beiden Seiten der äußeren Wand der Vakuumkammer 2, d.h. zu beiden Seiten der Wand des äußeren Metallrohrs 2a, angebracht. Dadurch können die Signal- und Energieübertragungsstrecke minimiert und der jeweilige Wirkungsgrad bei der Signal- und bei der Energieübertragung optimiert werden. Abhängig von der Übertragungsart müssen der Wiedergabesender 4 und der Empfänger 5 allerdings nicht in unmittelbarer Nähe zueinander angeordnet sein.

Der Empfänger 5 ist mit einer ebenfalls außerhalb der Vakuumkammer 2 angeordneten Anzeigeeinheit 6 kommunikativ verbunden, beispielsweise über ein Kabel 8.

Der Vakuumsensor 3 ist vorzugsweise ein MEMS-Vakuumsensor. Beispielsweise kann der MEMS-Vakuumsensor ein MEMS-Reibungsvakuummeter oder ein MEMS-Pirani-Vakuummeter sein. MEMS-Vakuumsensoren sind besonders kompakt und haben einen sehr geringen Stromverbrauch, weshalb sie für die Verwendung in vakuumisolierten Leitungen besonders geeignet sind.

Von dem Vakuumsensor 3 erfaßte Meßwerte werden von dem Wiedergabesender 4 drahtlos zu dem Empfänger 5 übertragen. Von dem Empfänger 5 werden die Meßwerte dann zu der Anzeigeeinheit 6 zur Anzeige weitergeleitet. Die drahtlose Signalübertragung kann beispielsweise mittels elektromagnetsicher Wellen erfolgen. Derartige Datenübertragungsarten sind bekannt und sollen hier nicht weiter erläutert werden.

Vorzugsweise enthalten der Empfänger 5 ein Energieübertragungsgerät (nicht dargestellt) und der Wiedergabesender 4 einen Energieempfänger (nicht dargestellt). Energieübertragungsgerät und - empfänger können aber auch jeweils außerhalb des Empfängers 5 und des Wiedergabesenders 4 angeordnet sein. Das Energieübertragungsgerät ist an eine Stromquelle (nicht dargestellt) angeschlossen und überträgt drahtlos von der Stromquelle erzeugte Energie zu dem Energieempfänger, um den Vakuumsensor 3 und den Wiedergabesender 4 mit elektrischer Energie zu versorgen.

Die drahtlose Energieübertragung zur Energieversorgung des Vakuumsensors 3 und des Wiedergabesenders 4 kann beispielsweise durch Induktion, kapazitiv oder mittels elektromagnetischer Wellen erfolgen. In jedem Fall muß der Abstand zwischen Energieübertragungsgerät und Energieempfänger der jeweiligen Übertragungsart angepaßt werden.

Im Falle der induktiven Energieübertragung sind der Wiedergabesender 4 und der Empfänger 5 jeweils mit geeigneten Spulenanordnungen ausgestattet. Eine Transmitterspule im Empfänger 5 wird von einem Wechselstrom durchflossen, wodurch ein magnetisches Wechselfeld erzeugt wird. Das magnetische Wechselfeld wiederum induziert in der Spule des Wiedergabesenders eine Spannung, durch welche ein Stromfluß ein den an der Spule angeschlossenen Leitungen und insbesondere im Vakuumsensor 3 erzeugt wird.

Im Falle der Energieübertragung mittels elektromagnetischer Wellen enthalten der Wiedergabesender 4 und der Empfänger 5 jeweils eine Antenne, beispielsweise in Form eines Dipols. Diese Art der drahtlosen Energieübertragung ist trotz ihres relativ geringen Wirkungsgrads für die Stromversorgung von MEMS-Vakuumsensoren geeignet, da diese nur sehr geringe Leistungen benötigen.

Im Falle der kapazitiven Energieübertragung wird die kapazitive Wirkung zweier Stromkreise aufeinander ausgenutzt. Das Energieübertragungsgerät enthält zwei elektrisch leitfähige Platten bzw. Übertragungselektroden, an welche ein elektrisches Wechselpotential angelegt wird. Der Energieempfänger enthält ebenfalls zwei elektrisch leitende, den Übertragungselektroden jeweils gegenüberliegende Platten bzw. Empfängerelektroden, wobei die Empfängerelektroden von den

Übertragungselektroden elektrisch isoliert sind, sodaß zwei Kondensatoren gebildet werden. Die Empfängerelektroden sind in Reihenschaltung mit dem Vakuumsensor 3 verbunden. Durch diesen Stromkreis fließt aufgrund des Wechselpotentials ein Wechselstrom, welcher elektrische Energie überträgt.

Alternativ kann die Energieversorgung des Vakuumsensors 3 und des Wiedergabesenders 4 kabelgebunden erfolgen. Zwei beispielhafte Ausführungsformen werden im Folgenden kurz skizziert.

Nach der ersten Ausführungsform ist es möglich, den Vakuumsensor 3 und den Wiedergabesender 4 mit elektrischer Energie zu versorgen, indem in der Vakuumkammer 2 ein elektrochemischer Energiespeicher (nicht dargestellt) angeordnet wird. Beispielsweise kann ein Akkumulator oder eine Batterie direkt in den Vakuumsensor 3 integriert sein, was besonders einfach zu realisieren ist.

Nach der zweiten Ausführungsform kann der bekannte thermoelektrische Effekt (Seebeck-Effekt) zur Energieversorgung in der Vakuumkammer 2 ausgenutzt werden. Die Wärme, die aus Temperaturunterschieden zwischen den verschiedenen Wänden der Vakuumkammer 2 entsteht, läßt sich mittels eines thermoelektrischen Generators (nicht dargestellt) in elektrische Energie umwandeln. Die Art der Energieversorgung ist besonders robust und langlebig.

In Fig. 2 sind, im Querschnitt, zwei voneinander getrennte Vakuumkammern 21, 22 eines Abschnitts einer Leitung 10 gezeigt. Die zwei Vakuumkammern 21, 22 sind für eine Vielzahl von verteilten Vakuumkammern, aus denen die Vakuumisolierung einer Leitung bestehen kann, stellvertretend dargestellt. Die beiden Vakuumkammern 21, 22 sind durch ein Zwischenstück 11 hermetisch voneinander getrennt. Jede der Vakuumkammern 21, 22 verfügt jeweils über einen Vakuumsensor 31, 32, einen Wiedergabesender 41, 42 und einen Empfänger 51, 52, wie oben in Verbindung mit Fig. 1 beschrieben. Die Anzeigeeinheit 6 an beide Empfänger 51, 52 angeschlossen, um die Meßwerte von beiden Vakuumsensoren 31, 32 parallel anzeigen zu können. Das Vakuum läßt sich deshalb zentral für mehrere verteilte Vakuumkammern überwachen bzw. überprüfen, ohne daß direkter Zugang zu den jeweiligen Vakuumkammern bestehen muß.

## Patentansprüche

1. Vorrichtung zur Bestimmung des Drucks in einer Vakuumkammer (2, 21, 22), welche einen innerhalb der Vakuumkammer (2, 21, 22) angeordneten Vakuumsensor (3, 31, 32) umfaßt, **dadurch gekennzeichnet,**
- **daß** innerhalb der Vakuumkammer (2, 21, 22) ein mit dem Vakuumsensor (3, 31, 32) verbundener Wiedergabesender (4, 41, 42) und außerhalb der Vakuumkammer (2, 21, 22) ein mit dem Wiedergabesender (4, 41, 42) drahtlos verbundener Empfänger (5, 51, 52) angeordnet sind und
- **daß** der Empfänger (5, 51, 52) mit einer außerhalb der Vakuumkammer (2, 21, 22) angeordneten Anzeigeeinheit (6) verbunden ist,
wobei der Wiedergabesender (4, 41, 42) und der Empfänger (5, 51, 52) zu beiden Seiten einer Wand der Vakuumkammer (2, 21, 22) angeordnet sind, sodaß von dem Vakuumsensor (3, 31, 32) erfaßte Meßwerte von dem Wiedergabesender (4, 41, 42) drahtlos zu dem Empfänger (5, 51, 52) übertragbar und von der Anzeigeeinheit (6) anzeigbar sind.

2. Vorrichtung nach Anspruch 1, **dadurch gekennzeichnet, daß** der Empfänger (5, 51, 52) ein mit einer Stromquelle verbundenes Energieübertragungsgerät und der Wiedergabesender (4, 41, 42) einen Energieempfänger umfaßt, wobei das Energieübertragungsgerät geeignet ist, von der Stromquelle erzeugte Energie zu dem Energieempfänger drahtlos zu übertragen, um den Vakuumsensor (3, 31, 32) und den Wiedergabesender (4, 41, 42) mit elektrischer Energie zu versorgen.

3. Vorrichtung nach Anspruch 2, **dadurch gekennzeichnet, daß** die Energie zwischen dem Energieübertragungsgerät und dem Energieempfänger induktiv, kapazitiv oder mittels elektromagnetischer Wellen übertragen wird.

4. Vorrichtung nach Anspruch 1, **dadurch gekennzeichnet, daß** die Vakuumkammer einen elektrochemischen Energiespeicher enthält, der geeignet ist, den Vakuumsensor (3, 31, 32) und den Wiedergabesender (4, 41, 42) mit elektrischer Energie zu versorgen.

5. Vorrichtung nach Anspruch 1, **dadurch gekennzeichnet, daß** ein thermoelektrische Generator enthalten ist, welcher geeignet ist, an den Wänden der Vakuumkammer (2, 21, 22) erzeugte Wärme in elektrische Energie umzuwandeln.

6. Vorrichtung nach einem der vorangehenden Ansprüche, **dadurch gekennzeichnet, daß** der Vakuumsensor (3, 31, 32) ein MEMS-Vakuumsensor ist.

7. Vorrichtung nach Anspruch 6, **dadurch gekennzeichnet, daß** der MEMS-Vakuumsensor ein MEMS-Reibungsvakuummeter ist.

8. Vorrichtung nach Anspruch 6, **dadurch gekennzeichnet, daß** der MEMS-Vakuumsensor ein MEMS-Wärmeleitungsvakuummeter ist.

9. Vorrichtung nach einem der vorangehenden Ansprüche, **dadurch gekennzeichnet, daß** die Anzeigeeinheit (6) geeignet ist, Meßwerte von mehreren Vakuumsensoren (31, 32), die jeweils in einer Vakuumkammer (21, 22) angeordnet sind, anzuzeigen.

10. Vorrichtung nach einem der vorangehenden Ansprüche, **dadurch gekennzeichnet, daß** die Vakuumkammer (2, 21, 22) aus zwei konzentrisch und mit Abstand zueinander angeordneten Rohren (2a, 2b) aus Metall besteht, zwischen denen das Vakuum erzeugt ist.
